# EUROPEAN PATENT SPECIFICATION

(11) **EP 2 302 812 B1**
(45) Date of publication and mention of the grant of the patent: **03.05.2017**
(21) Application number: 09809437.8
(22) Date of filing: 04.03.2009
(51) Int. Cl.: H04B 1/04, G08C 15/00, G08C 17/00, H01Q 1/50, H01Q 7/00, H04B 1/40

(54) **WIRELESS DEVICE AND MEASURING DEVICE PROVIDED WITH THE SAME**
MOBILES GERÄT AUSGESTATTET MIT EINER MESSEINHEIT
DISPOSITIF SANS FIL ET DISPOSITIF DE MESURE ÉQUIPÉ DE CE DERNIER

(30) Priority: 01.09.2008 JP 2008223127
(43) Date of publication of application: 30.03.2011
(73) Proprietor: Panasonic Corporation, Kadoma-shi Osaka 571-8501 (JP)
(72) Inventor: MIYASHITA, Norihiro, Chuo-ku, Osaka-shi Osaka 540-6207 (JP)
(74) Representative: Schwabe - Sandmair - Marx
(86) International application number: PCT/JP2009/000974
(87) International publication number: WO 2010/023778

(56) References cited:
- WO-A1-2008/016138
- JP-A- 9 027 092
- JP-A- 11 086 174
- JP-A- 58 053 235
- JP-A- 2002 246 827
- JP-A- 2007 325 621
- US-A1- 2002 018 021
- US-A1- 2007 069 957

## Description

### Technical Field

The present invention relates to a wireless device, and a measuring device equipped with the wireless device for transmitting wirelessly a measured value, e.g. a used amount of city water, city gas, or electricity.

### Background Art

In recent years, an automatic meter-reading system has been introduced. This system is formed of a measuring device and a wireless device. The measuring device is used for measuring a used amount of city water, city gas, or electricity, and the wireless device is used for transmitting the measured value wirelessly. Since the wireless device is usually laid on a wall, on a metal housing of the measuring device, or at a place close to pipes, it is desirably small in size, and resists being affected by the metal.

Patent literatures 1 and 2 disclose measuring devices equipped with wireless devices having inverted F-type antennas featuring low-height body. These measuring devices avoid being affected from the surroundings such as metal because the use of these devices is restricted to certain places, so that they cannot be installed at places other than the certain places. On top of that, the inverted F-type antenna is constructed complicatedly, which prevents the wireless device from being downsized.
Patent Literature 1: Unexamined Japanese Patent Application Publication No. H09 - 027092
Patent Literature 2: Unexamined Japanese Patent Application Publication No. H11 - 086174 Another prior art example is disclosed in WO2008/016138.

### Disclosure of Invention

A wireless device is equipped with a grounding plate, a loop antenna formed on a surface of the grounding plate, and a power feeder for feeding the loop antenna with signals corresponding to a value measured by a measuring device. The wireless device can be laid at any place and downsized.

### Brief Description of Drawings

Fig. 1 is a perspective view of a measuring device in accordance with an embodiment of the present invention.
Fig. 2 shows a structure of a wireless device of the measuring device in accordance with the embodiment of the present invention.
Fig. 3 is a diagram of a matching circuit of the wireless device in accordance with the embodiment of the present invention.
Fig. 4 shows characteristics of an antenna of the wireless device in accordance with the embodiment of the present invention.
Fig. 5 shows characteristics of an antenna in accordance with an embodiment of the present invention.
Fig. 6 shows characteristics of an antenna in accordance with an embodiment of the present invention.
Fig. 7 is a diagram of a matching circuit formed for a comparison purpose.
Fig. 8 is a perspective view showing an inside of a wireless device in accordance with an embodiment of the present invention.
Fig. 9 is a perspective view showing an inside of another wireless device in accordance with an embodiment of the present invention.
Fig. 10 is a perspective view showing an inside of still another wireless device in accordance with an embodiment of the present invention.
Fig. 11 is a perspective view showing an inside of yet still another wireless device in accordance with an embodiment of the present invention.

### Description of Reference Signs

- 100A: measuring unit
- 201: grounding plate
- 201C: junction (first junction)
- 201D: junction (second junction)
- 202: communication circuit
- 202A: feeding terminal
- 203: matching circuit
- 204: loop antenna
- 204A: end section (first end section)
- 204B: end section (second end section)
- 205: battery
- 301: power feeder
- 301A: power feeding point
- 301B: grounding point
- 1204: conductive belt
- 2204: loop plane
- C1: series capacitor
- C2: parallel capacitor

### Preferred Embodiment for Carrying Out the Invention

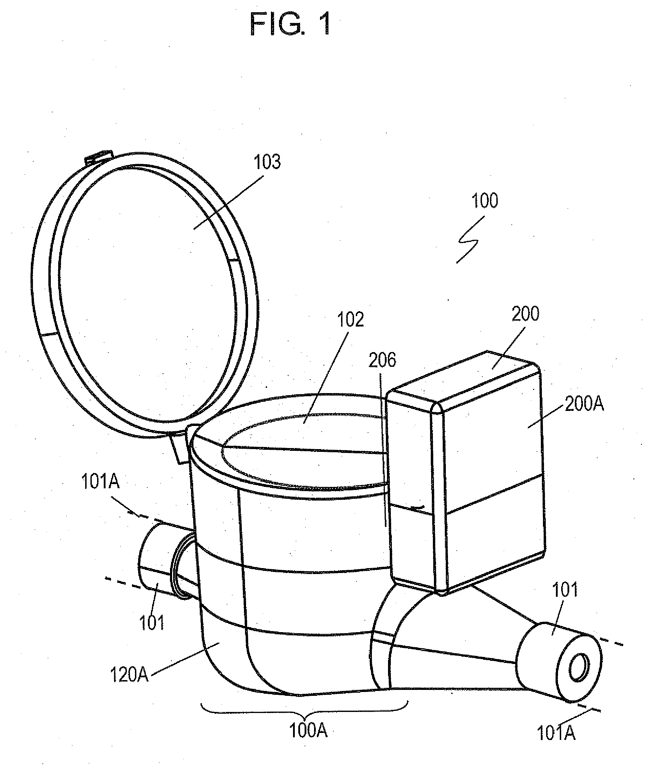

Fig. 1 is a perspective view of measuring device 100 in accordance with this embodiment of the present invention. Measuring device 100 is formed of measuring unit 100A and wireless device 200. Measuring unit 100A includes measuring section 120A for measuring a used amount, joint section 101 for connecting to pipe 101A, display section 102 for displaying a value measured by measuring section 120A, and lid 103 for covering display section 102. In this embodiment, measuring unit 100A, i.e. measuring section 120A, measures an amount of fluid, e.g. gas or water, flowing through pipe 101A. Wireless device 200 is placed around display section 102, and transmits the measured value to an external wireless terminal over-the-air, and exchanges radio signals with the wireless terminal. Wireless device 200 is placed on installation face 206 and accommodated in housing 200A. Installation face 206 is a part of a surface of measuring section 120A.

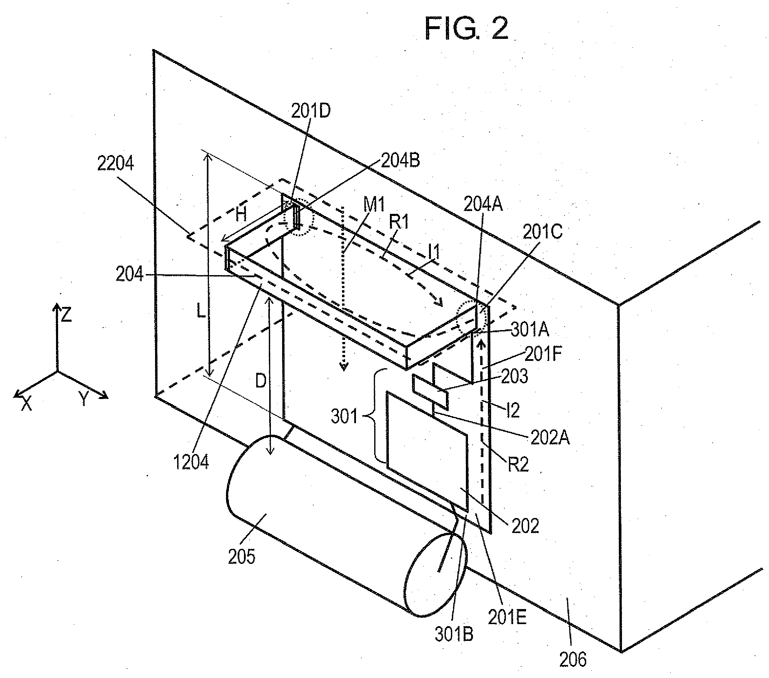

Fig. 2 shows a structure of wireless device 200. In Fig. 2, three axes crossing each other at right angles are defined as X-axis, Y-axis, and Z-axis. X-axis is vertical relative to installation face 206. Housing 200A is omitted from Fig. 2 in order to describe the structure of wireless device 200. Grounding plate 201 is formed of conductive material, and has surface 201A and rear face 201B opposite to surface 201A. Communication circuit 202 is placed on rear face 201B of grounding plate 201, and works as a transmit-receive circuit for outputting a transmit signal and processing a received signal. Communication circuit 202 can be a transmitting circuit that outputs a signal but does not receive a signal, or it can be a receiving circuit that receives a signal but does not output a signal.

Matching circuit 203 is laid on surface 201A of grounding plate 201 and connected to both of loop antenna 204 and communication circuit 202, which includes feeding terminal 202A connected to matching circuit 203. Communication circuit 202 generates a signal corresponding to a value measured by the measuring device 100. Matching circuit 203 and communication circuit 202 form power feeder 301 that feeds the signal to loop antenna 204. Matching circuit 203 matches impedance between loop antenna 204 and communication circuit 202 in order to feed electricity to loop antenna 204 efficiently.

Loop antenna 204 is formed of conductive belt 1204 shaped like a letter "U" and includes end sections 204A, 204B. Conductive belt 1204 and grounding plate 201 form a rectangular loop. End sections 204A, 204B are joined to junctions 201C, 201D respectively on surface 201A of grounding plate 201. Loop antenna 204 is electrically connected to matching circuit 203 at end section 204A, and electrically connected to grounding plate 201 at end section 204B. Loop antenna 204 and grounding plate 201 form a loop antenna made of conductive material shaped like a loop.

The total length of loop antenna 204 is not longer than a wavelength of radio wave transmitted or received. Loop antenna 204 is formed by bending plate-like conductive belt 1204. Loop plane 2204 including the rectangular loop of loop antenna 204 is substantially vertical relative to grounding plate 201. The loop shape is not always a rectangular. Loop antenna 204 is mounted to an end of surface 201A, in the Z-axis direction, of grounding plate 201.

Battery 205 is electrically connected to both of communication circuit 202 and grounding plate 201, and feeds electric power to circuit 202. Installation face 206, i.e. a part of the surface of measuring section 120A is made of conductive material.

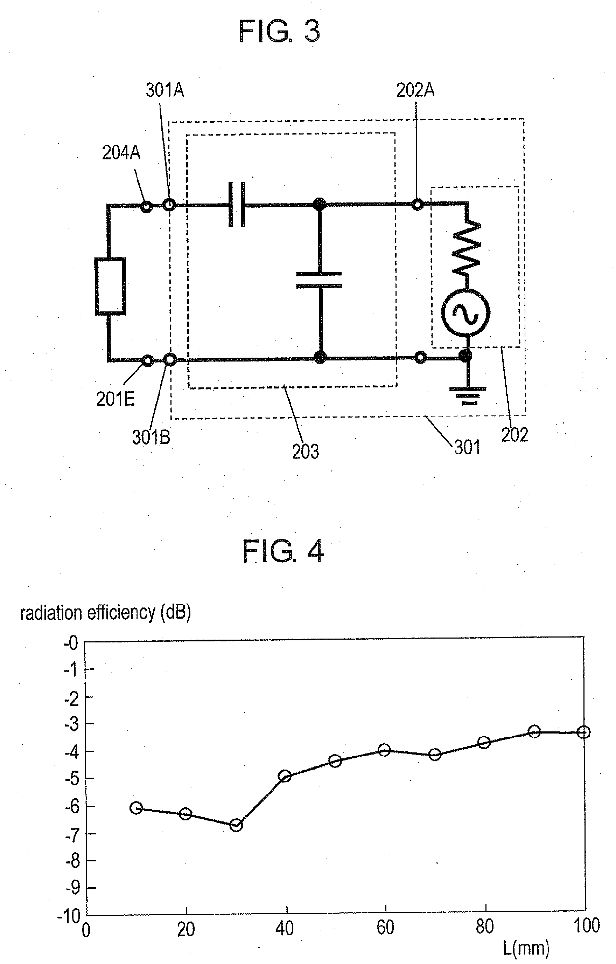

Fig. 3 is a circuit diagram of power feeder 301 including matching circuit 203 and communication circuit 202. Matching circuit 203 is formed of series capacitor C1 and parallel capacitor C2. Series capacitor C1 is connected to both of feeding terminal 202A of communication circuit 202 and power feeding point 301A, i.e. junction 201C of grounding plate 201. Parallel capacitor C2 is connected between feeding terminal 202A and grounding point 301B, and connected to communication circuit 202 in parallel. Loop antenna 204 has so small radiation resistance that the loss in matching circuit 203 should be little. Since the loss in an inductor is greater than that in a capacitor, use of the inductor in the matching circuit will lower the radiation efficiency, whereby the gain is lowered greatly. Matching circuit 203 thus preferably employs capacitors instead of inductors.

Assume that communication circuit 202 outputs a signal from feeding terminal 202A with a frequency of 434 MHz, input impedance Z11 of the antenna is 1Ω at real part Re(Z11) and 180Ω at imaginary part Im(Z11.). Matching circuit 203 in this assumed condition works this way: Matching circuit 203 shown in Fig. 3 is formed of series capacitor C1 having capacitance of 2.12 pF and parallel capacitor C2 having capacitance of 51 pF. Capacitor C1 thus has smaller capacitance than capacitor C2.

Wireless device 200 operates this way: In Fig. 2, X-Y plane including X-axis and Y-axis lies in parallel with the ground. A polarized wave in parallel with Z-axis is defined as a vertical polarized wave, and a polarized wave vertical relative to the vertical polarized wave is defined as a horizontal polarized wave. Power feeder 301 formed of communication circuit 202 and matching circuit 203 includes feeding point 301A and grounding point 301B. Feeding point 301A is coupled to end section 204A of loop antenna 204, and grounding point 301B of power feeder 301 is coupled to junction 201E that is located on surface 201A of grounding plate 201 and under junction 201C in parallel with Z-axis. Power feeder 301 feeds the electricity from feeding point 301A to end section 204A of loop antenna 204, then electric currents I1, I2 run on routes R1, R2 respectively.

Route R1 conveys current I1 to grounding plate 201 through loop antenna 204. Electric current I1. generates magnetic current M1 and radiates the horizontal polarized wave, so that loop antenna 204 works as a magnetic current antenna that uses the magnetic current as a radiation source. Magnetic current M1 flows vertically relative to X-Y plane and in parallel with Z-axis in the loop shape formed by loop antenna 204 and grounding plate 201. The loop shape is formed within loop plane 2204 that lies in parallel with X-Y plane.

Route R2 conveys electric current 12 in parallel with Z-axis from junction 201E of grounding plate 201 to junction 201C. Current 12 that runs in parallel with Z-axis on grounding plate 201 radiates the vertical polarized wave. Section 201F defined between junction 201E and junction 201C on surface 201A of grounding plate 201 works as an electric current antenna that uses the electric current as a radiation source. Section 201F on surface 201A of grounding plate 201 extends along Z-axis, in other words, it extends vertically relative to X-Y plane and loop plane 2204.

The magnetic-current antenna achieves high gain when the magnetic current runs in parallel with the conductive plane, whereas it obtains low gain when the magnetic current runs vertically relative to the conductive plane. On the other hand, the electric-current antenna obtains low gain when the electric current runs in parallel to the conductive plane, whereas it achieves high gain when the electric current runs vertically relative to the conductive plane.

When installation face 206 of wireless device 200 is laid vertically relative to X-axis or Y-axis, loop antenna 204 works as the magnetic current antenna, so that loop antenna 204 achieves high gain, while grounding plate 201 works as the electric current antenna, so that its gain lowers substantially. As a result, when installation face 206 is laid vertically relative to X-axis or Y-axis, loop antenna 204 works as the magnetic current antenna.

In a case, where installation face 206 is laid vertically relative to Z-axis, loop antenna 204 works as the magnetic current antenna, so that its gain lowers substantially, while grounding plate 201 works as the electric current antenna and achieves high gain. As a result, when installation face 206 is laid vertically relative to Z-axis, wireless device 200 works as the electric current antenna. As discussed above, when installation face 206, made of conductive material, of wireless device 200 is placed vertically relative to any direction, the antenna of wireless device 200 can achieve high gain.

Since the total length of loop antenna 204 is not longer than the wavelengths of the radio waves transmitted or received by loop antenna 204, the loop shape of loop antenna 204 has a smaller diameter than the wavelength. On top of that, loop antenna 204 is mounted on grounding plate 201, so that wireless device 200 can be downsized and simply structured.

Measuring section 120A can measure a used amount of electricity instead of city gas or city water, and wireless device 200 can transmit the used amount of electricity. Wireless device 200 is not necessarily placed near measuring section 120A, and it can be as a radio repeater that relays a radio communication between measuring section 120A and an external radio terminal.

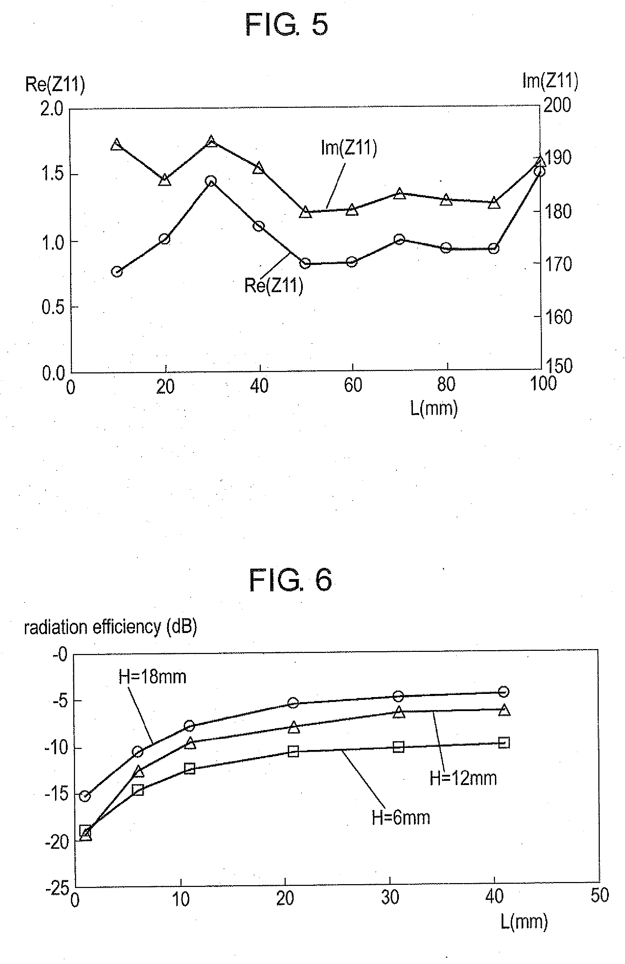

Fig. 4 shows a relation between length "L" of grounding plate 201 along Z-axis and radiation efficiency of the antenna. As shown in Fig. 4, a longer length "L" invites greater radiation efficiency. Fig. 5 shows a relation between length "L" of grounding plate 201 and real part Re(Z11), imaginary part Im(Z11) of input impedance Z11 of the antenna. Imaginary part Im(Z11) indicates inductive of input impedance Z11, which takes the lowest value when length "L" falls within the range from 50 - 90 mm. A greater impedance Z11 invites a reduction in the capacitance of the capacitor needed for matching the impedance, so that it will be difficult to match communication circuit 202 with loop antenna 204. Length "L" of grounding plate 201 thus desirably falls within the range from 50 - 90 mm.

Distance "D" along Z-axis between loop antenna 204 and battery 205 is described hereinafter. Fig. 6 shows a relation between distance "D" and the radiation efficiency of loop antenna 204. Distance "D" not greater than 10 mm will lower the radiation efficiency substantially regardless of width "H" along Z-axis of conductive belt 1204 of loop antenna 204. In other words, distance "D" between loop antenna 204 and battery 205 desirably takes a value not smaller than 10 mm.

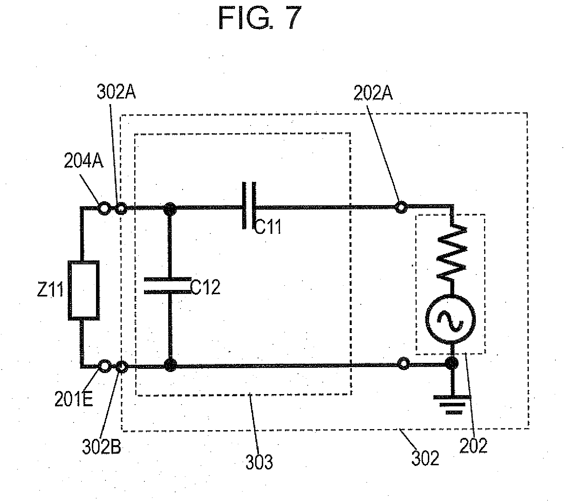

Fig. 7 is a circuit diagram of power feeder 302 made for comparison purpose. In Fig. 7 similar elements to those in Fig. 3 have the same reference signs and the descriptions thereof are omitted here. Power feeder 302 shown in Fig. 7 differs from power feeder 301 shown in Fig. 3 in matching circuit 303 that replaces matching circuit 203 in power feeder 301. Power feeder 302 includes power feeding point 302A and grounding point 302B coupled respectively to junction 201C and junction 201E on surface 201A of grounding plate 201. Matching circuit 303 is formed of series capacitor C11 and parallel capacitor C12. Series capacitor C11 is connected to both of feeding terminal 202A of communication circuit 202 and power feeding point 302A, i.e. junction 201C of grounding plate 201. Parallel capacitor C12 is connected between feeding point 302A and grounding point 302B. Matching circuit 303 shown in Fig. 7 thus differs from matching circuit 203 shown in Fig. 3 in the connecting position of the parallel capacitor.

Assume that communication circuit 202 supplies a signal from its feeding terminal 202A at the frequency of 434 MHz, the impedance of real part Re(Z11.) of the antenna is 1Ω and that of imaginary part Im(Z11) is 1800Ω. In this assumed condition, matching circuits 203 and 303 work this way: Matching circuit shown in Fig. 3 is formed of series capacitor C1 having capacitance of 2.12 pF and parallel capacitor C2 having capacitance of 51 pF, while matching circuit 303 shown in Fig. 7 is formed of series capacitor C11 having capacitance of 0.29 pF and parallel capacitor C12 having capacitance of 1.75 pF. Capacitors C11, C12 thus have smaller amounts of capacitance than capacitors C1, C2. Series capacitor C11, in particular, stores so small capacitance lower than 0.5 pF that an accurate, though expensive, capacitor should be used as capacitor C11. This comparison proves that matching circuit 203 shown in Fig. 3 is preferable to matching circuit 303 because it can use inexpensive capacitors C1, C2 in 400 MHz band.

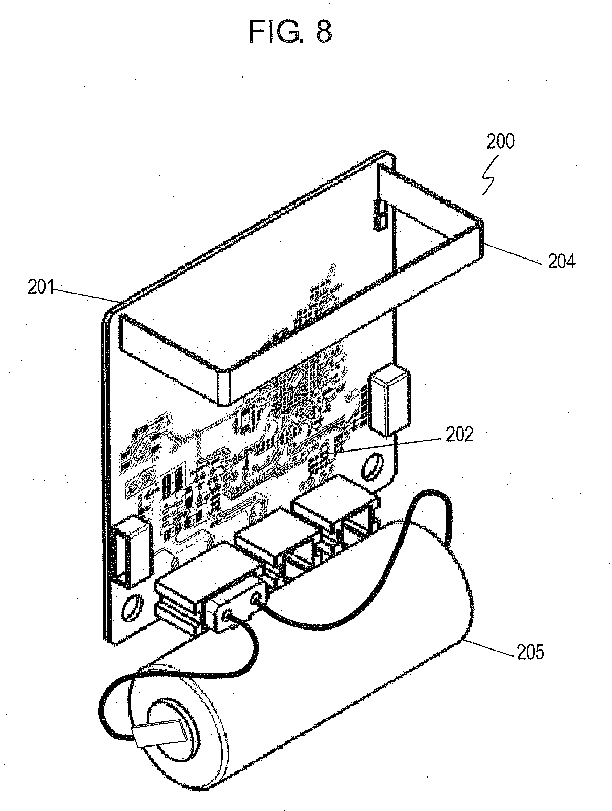

Fig. 8 is a perspective view illustrating the inside of housing 200A of wireless device 200. As shown in Fig. 8, loop antenna 204 is mounted on grounding plate 201 at one of the sides, and battery 205 is placed outside grounding plate 201 while it is kept confronting loop antenna 204. Battery 205 is electrically coupled to a connector formed on grounding plate 201 via wires rigidly connected with solder to electrodes of battery 205. In this embodiment grounding plate 201 has a length of 50 mm, loop antenna 204 is away from battery 205 with a distance of 52 mm, loop antenna 204 has a height of 17 mm. This structure does not invite degradation in the antenna gain.

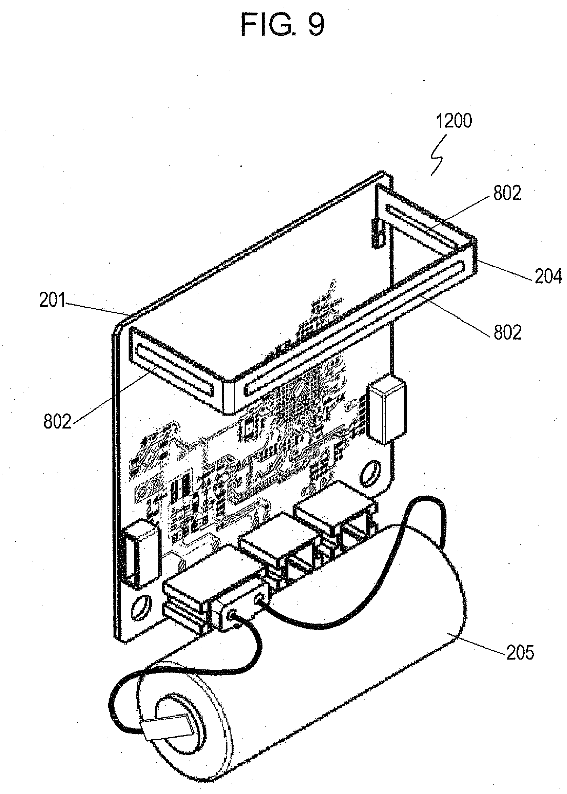

Fig. 9 is a perspective view illustrating the inside of housing 200A of another wireless device 1200 in accordance with this embodiment. In Fig. 9 similar elements to those of wireless device 200 shown in Fig. 8 have the same reference signs and the descriptions thereof are omitted here.

As shown in Fig. 9, loop antenna 204 is mounted on grounding plate 201 at one of the sides, and battery 205 is placed outside grounding plate 201 while it is kept confronting loop antenna 204. Reinforcing section 802 having a protruded surface is formed on loop antenna 204 such that it runs along a stretch of loop antenna 204. The dimensional specification of wireless device 1200 is this: grounding plate 201 has a length of 50 mm, a distance between loop antenna 204 and battery 205 is 52 mm, loop antenna 204 has a height of 17 mm.

Loop antenna 204 is formed by bending a conductive plate at right angles into a shape of letter "U". Given dimensions or greater ones are needed for the loop antenna 204 to obtain predetermined communication characteristics; however, loop antenna 204 can be deformed unintentionally during the manufacturing steps. The presence of reinforcing section 802 thus can increase the strength of loop antenna 204. The advantage obtained by increasing the strength is not only effective in the manufacturing steps but also effective in other situations. Reinforcing section 802 can have a recessed surface instead of the protruded surface.

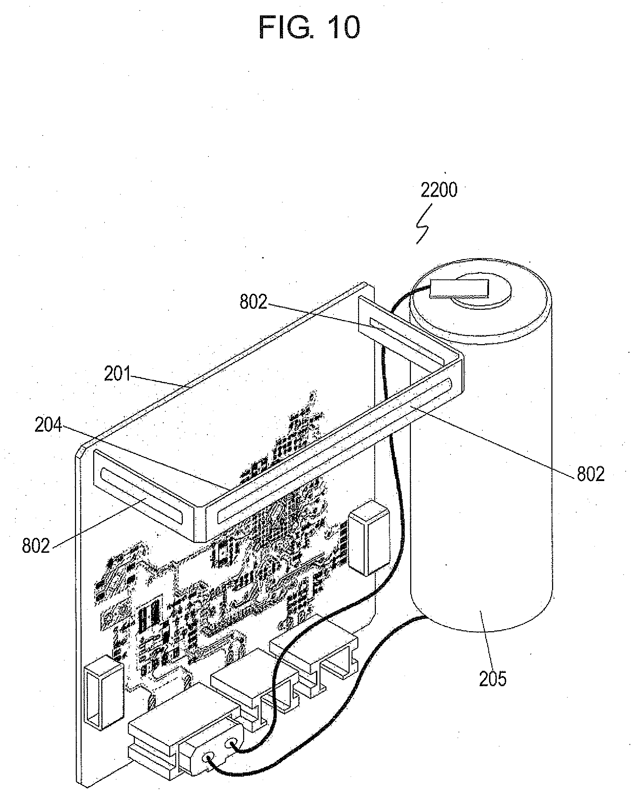

Fig. 10 is a perspective view illustrating the inside of housing 200A of still another wireless device 2200 in accordance with this embodiment. In Fig. 10 similar elements to those of wireless device 1200 shown in Fig. 9 have the same reference signs and the descriptions thereof are omitted here.

Loop antenna 204 is desirably apart from battery 205 by a distance of not shorter than 10 mm. As shown in Fig. 10, battery 205 is placed vertically relative to the loop plane of loop antenna 204, so that a projective area of battery 205 onto the loop plane becomes smaller, thereby mitigating the degradation in the radiation efficiency.

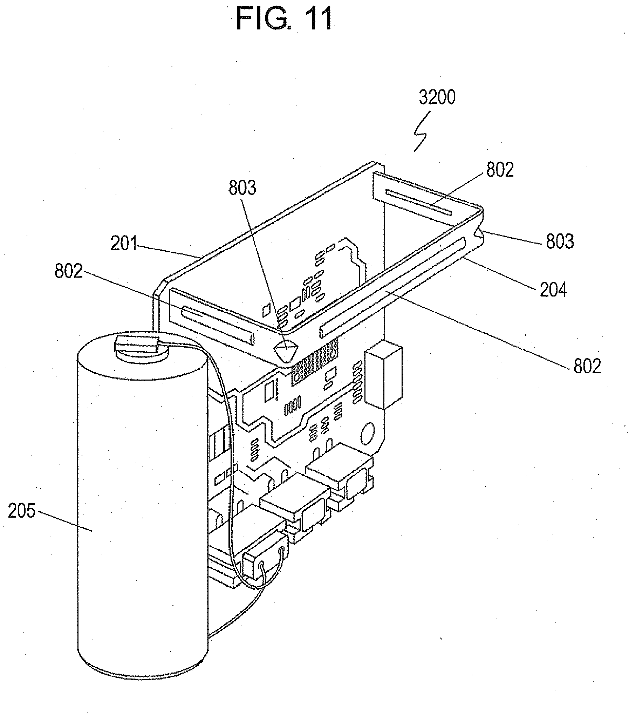

Fig. 11 is a perspective view illustrating the inside of housing 200A of yet another wireless device 3200 in accordance with this embodiment. In Fig. 11 similar elements to those of wireless device 2200 shown in Fig. 10 have the same reference signs and the descriptions thereof are omitted here.

In wireless device 3200, battery 205 is placed vertically relative to the loop plane of loop antenna 204, so that a projective area of battery 205 onto the loop plane becomes smaller, thereby mitigating the degradation in the radiation efficiency. In addition to reinforcing section 802 formed on loop antenna 204, another reinforcing section 803 is formed by recessing the bent sections of loop antenna 204 for increasing the strength of loop antenna 204.

In wireless devices 200, 1200, 2200, and 3200 shown in Fig. 8 - Fig. 11, battery 205 is placed outside grounding plate 201; however, it can be mounted on grounding plate 201.

### Industrial Applicability

The measuring device including the wireless device of the present invention can be laid in any place and downsized. The wireless device is not restricted to a device attached to the measuring device, but it can be mounted near a pipe or on a wall and can be used as a radio repeater.

## Claims

1. A wireless device (200) comprising:
a grounding plate (201) including a surface;
a loop antenna (204) having a loop shape included in a loop plane which is perpendicular to the surface of the grounding plate (201); and
a power feeder (301) including a grounding point (301B) coupled to the grounding plate (201) and a power feeding point (301A) for supplying a signal to one end section (204A) of the loop antenna (204), wherein the grounding point (301B) and the power feeding point (301A) are displaced along an axis perpendicular to the loop plane such that a section (201F) of the grounding plate (201) between the grounding point (301B) and the power feeding point (301A) works as an electric current antenna extending perpendicular to the loop plane, wherein the other end section (204B) of the loop antenna (204) is electrically connected to the grounding plate (201).

2. The wireless device (200) of claim 1, wherein the loop antenna (204) includes a conductive belt (1204) formed of a first end section (204A) coupled to a first junction (201C) on the surface of the grounding plate (201) and a second end section (204B) coupled to a second junction (201D) on the surface of the grounding plate (201),
wherein the first end section (204A) of the conductive belt (1204) is coupled to the first junction (201C).

3. The wireless device (200) of claim 2, wherein the power feeder (301) includes:
a communication circuit (202) having a feeding terminal (202A) for supplying the signal; and
a matching circuit (203) coupled between the loop antenna (204) and the feeding terminal (202A) of the communication circuit (202),
wherein the matching circuit (203) includes:
a parallel capacitor (C2) coupled between the feeding terminal (202A) of the communication circuit (202) and the grounding point (301B); and
a series capacitor (C1) coupled between the loop antenna (204) and the feeding terminal (202A) of the communication circuit (202) and having capacitance smaller than the parallel capacitor (C2).

4. The wireless device (200) of claim 1 further comprising a battery (205) for supplying electricity to the power feeder (301).

5. A measuring device (100) comprising:
a measuring unit (100A) for measuring a value to be measured; and
a wireless device (200) according to any one of claim 1 to 4.

## Patentansprüche

1. Drahtlose Vorrichtung (200), die umfasst:
eine Erdungsplatte (201) mit einer Oberfläche;
eine Schleifenantenne (204) mit einer Schleifenform, die in einer Schleifenebene enthalten ist, die sich rechtwinklig zu der Oberfläche der Erdungsplatte (201) befindet; und
eine Leistungszuführung (301) mit einem mit der Erdungsplatte (201) gekoppelten Erdungspunkt (301B) und einem Leistungszuführungspunkt (301A) zum Anlegen eines Signals an einen Endabschnitt (204A) der Schleifenantenne (204), wobei der Erdungspunkt (301 B) und der Leistungszuführungspunkt (301A) längs einer Achse rechtwinklig zu der Schleifenebene verschoben sind, so dass ein Abschnitt (201 F) der Erdungsplatte (201) zwischen dem Erdungspunkt (301B) und dem Leistungszuführungspunkt (301A) als eine elektrische Stromantenne arbeitet, die sich rechtwinklig zu der Schleifenebene erstreckt,
wobei der andere Endabschnitt (204B) der Schleifenantenne (204) mit der Erdungsplatte (201) elektrisch verbunden ist.

2. Drahtlose Vorrichtung (200) nach Anspruch 1, wobei die Schleifenantenne (204) ein leitendes Band (1204) aufweist, das aus einem mit einer ersten Verbindungsstelle (201 C) auf der Oberfläche der Erdungsplatte (201) gekoppelten ersten Endabschnitt (204A) und einem mit einer zweiten Verbindungsstelle (201 D) auf der Oberfläche der Erdungsplatte (201) gekoppelten zweiten Endabschnitt (204B) ausgebildet ist,
wobei der erste Endabschnitt (204A) des leitenden Bandes (1204) mit der ersten Verbindungsstelle (201 C) gekoppelt ist.

3. Drahtlose Vorrichtung (200) nach Anspruch 2, wobei die Leistungszuführung (301) aufweist:
einen Kommunikationsschaltkreis (202) mit einem Zuführungsanschluss (202A) zum Anlegen des Signals; und
einem Anpassungsschaltkreis (203), der zwischen der Schleifenantenne (204) und dem Zuführungsanschluss (202) des Kommunikationsschaltkreises (202) gekoppelt ist,
wobei der Anpassungsschaltkreis (203) aufweist:
einen Parallelkondensator (C2), der zwischen dem Zuführungsanschluss (202A) des Kommunikationsschaltkreises (202) und dem Erdungspunkt (301 B) gekoppelt ist; und
einen Reihenkondensator (C1), der zwischen der Schleifenantenne (304) und dem Zuführungsanschluss (202A) des Kommunikationsschaltkreises (202) gekoppelt ist und eine Kapazität hat, die kleiner ist als der Parallelkondensator (C2).

4. Drahtlose Vorrichtung (200) nach Anspruch 1, die des Weiteren eine Batterie (205) umfasst, um die Leistungszuführung (301) mit Elektrizität zu versorgen.

5. Messvorrichtung (100), die umfasst:
eine Messeinheit (100A) zum Messen eines zu messenden Wertes; und
eine drahtlose Vorrichtung (200) nach einem der Ansprüche 1 bis 4.

## Revendications

1. Dispositif sans fil (200) comprenant :
une plaque de mise à la masse (201) incluant une surface ;
une antenne cadre (204) ayant la forme d'un cercle inclus dans un plan de cercle qui est perpendiculaire à la surface de la plaque de mise à la masse (201) ; et
une alimentation électrique (301) incluant un point de mise à la masse (301B) couplé à la plaque de mise à la masse (201) et un point d'alimentation électrique (301A) pour fournir un signal à une section terminale (204A) de l'antenne cadre (204), où le point de mise à la masse (301B) et le point d'alimentation électrique (301A) sont déplacés le long d'un axe perpendiculaire au plan du cercle de manière à ce qu'une section (201F) de la plaque de mise à la masse (201) entre le point de mise à la masse (301B) et le point d'alimentation électrique (301A) fonctionne comme une antenne électrique s'étendant perpendiculairement au plan du cercle,
où l'autre section terminale (204B) de l'antenne cadre (204) est connectée électriquement à la plaque de mise à la masse (201).

2. Dispositif sans fil (200) selon la revendication 1, où l'antenne cadre (204) inclut une courroie conductrice (1204) formée d'une première section terminale (204A) couplée à une première jonction (201C) sur la surface de la plaque de mise à la masse (201) et d'une seconde section terminale (204B) couplée à une seconde jonction (201D) sur la surface de la plaque de mise à la masse (201),
où la première section terminale (204A) de la courroie conductrice (1204) est couplée à la première jonction (201C).

3. Dispositif sans fil (200) selon la revendication 2, où l'alimentation électrique (301) inclut :
un circuit de communication (202) ayant une borne d'alimentation (202A) pour fournir le signal ; et
un circuit d'adaptation (203) couplé entre l'antenne cadre (204) et la borne d'alimentation (202A) du circuit de communication (202),
où le circuit d'adaptation (203) inclut :
un condensateur en parallèle (C2) couplé entre la borne d'alimentation (202A) du circuit de communication (202) et le point de mise à la masse (301B) ; et
un condensateur en série (C1) couplé entre l'antenne cadre (204) et la borne d'alimentation (202A) du circuit de communication (202) et ayant une capacitance inférieure à celle du condensateur en parallèle (C2).

4. Dispositif sans fil (200) selon la revendication 1, comprenant en outre une pile (205) pour alimenter l'alimentation électrique (301) en électricité.

5. Dispositif de mesure (100) comprenant :
une unité de mesure (100A) pour mesurer une valeur à mesurer ; et
un dispositif sans fil (200) selon l'une quelconque des revendications 1 à 4.
